# EUROPEAN PATENT SPECIFICATION

(11) **EP 3 059 818 B1**
(45) Date of publication and mention of the grant of the patent: **31.03.2021**
(21) Application number: 15155887.1
(22) Date of filing: 20.02.2015
(51) Int. Cl.: H02G 3/08, H02G 3/12

(54) **Mounting box**
Anbringungskasten
Boîtier de montage

(43) Date of publication of application: 24.08.2016
(73) Proprietor: ABB Schweiz AG, 5400 Baden (CH)
(72) Inventor: Andersson, Johan, 06100 Porvoo (FI); Luomi, Juho, 06100 Porvoo (FI); Tervo, Pekka, 06100 Porvoo (FI)
(74) Representative: Kolster Oy Ab

(56) References cited:
- EP-A1- 1 511 144
- WO-A2-2012/042232
- DE-A1- 2 312 605
- DE-A1- 4 020 678
- DE-A1-102010 026 553
- DE-U1-202006 010 817
- FR-A3- 2 797 357
- JP-A- 2002 223 515

## Description

### FIELD OF THE INVENTION

The present invention relates to a mounting box according to the preamble of claim 1.

### BACKGROUND ART

There are two basic types of mounting boxes.

The first type of mounting box is intended to be mounted in a wall comprising an inner wall and an outer wall at a distance from the inner wall. The mounting box is attached to the outer wall in a situation when the inner wall has not yet been erected. The tubes for the electric wires running in the space between the walls are connected to the mounting box before the inner wall is erected. The inner wall is then erected, whereby an opening is formed in the inner wall for an adjustment collar of the mounting box. The adjustment collar will protrude through the opening in the inner wall so that the planar outer surface of the adjustment collar is flush with the inner surface of the inner wall. Access to the mounting space provided within the mounting box is thus provided through the adjustment collar.

EP 2 822 120 discloses a mounting box of the first type. The mounting box comprises a box case defining a mounting space, an adjustment collar adapted to be attached to an inside periphery of the mounting space, and attachment means for attaching the adjustment collar to the inside periphery of the mounting space. The attachment means comprises at least one fixing member pivotably supported to the adjustment collar for pivoting between a disengaged position and a locking position. The at least one fixing member comprises a contact surface which is adapted to cooperate with a counterpart surface on the inside periphery of the mounting space in the locking position of the fixing member.

EP 1 511 144 discloses a flush-mounted mounting box comprising a bottom, a cylindrical side wall, which rises from the bottom and which defines a housing, and a front opening provided opposite to said bottom. The upper end of the cylindrical wall comprises flange means seating against a wall when the mounting box is pushed through an opening in the wall. A separate ring can be pushed in the axial direction into said housing. The ring is provided with fastening means for at least one equipment support. The ring comprises further mounting means cooperating with complementary assembly means carried by said cylindrical side wall for fixing the mounting box to the wall.

JP 2002-223515 discloses a wiring box comprising a bottom part and a top part. Insertion sections are formed to the side walls of the bottom part into a notched shape which is open at the upper end of the side wall. The wiring cover pipe can be pushed from the upper open edge downwards into insertion sections in the bottom part. The connector and nut member used earlier to connect the wiring cover pipe to the bottom part is no longer needed.

DE 40 20 678 discloses a mounting box comprising a cylindrical portion, a contracting portion and a bottom. The contracting portion is provided with cable openings. The mounting box can be pushed through an opening in a wall. The upper end of the cylindrical portion has flange means seating against the wall. The fastening means are based on a shaft being provided with a spring and a claw on the outer surface of the shaft. The cross section of the shaft is non-circular so that the claw can move in the axial direction along the shaft but is locked to the shaft in a circumferential movement. The spring is acting on the claw. The claw has a non-active position and an active position. The claw is resting on a support surface in the mounting box in the non-active position. The spring presses the claw against the support surface. The shaft and thereby also the claw can be turned degrees with a screw driver from a screw positioned on the front surface of the mounting box. This will release the claw from the support surface, whereby the claw moves instantly upwards under the pressure of the spring so that the claw becomes seated against the inner surface of the wall. The mounting box becomes attached to the wall in this way.

DE 10 2010 026 553 discloses a cable outlet e.g. for a furniture. The cable outlet comprises an incorporation unit in which an installation orifice of an incorporation plane is installed. An extensible tube is formed from the incorporation unit and positioned in preferential operational positions. The extensible tube is sliding supported at a flange of a socket. The extensible tube is adjustable in height, and a groove is formed as a rising spiral helix or as a bayonet nut at the socket. The groove is formed with constriction, projection or corresponding recordings.

The second type of mounting box is also intended to be mounted in a wall comprising an inner wall and an outer wall at a distance from the first wall. This second type of mounting box is, however, mounted to the wall at the stage when also the inner wall has been erected. An opening is formed to the inner wall and the second type of mounting box is mounted into the wall by pushing the mounting box through the opening in the inner wall so that the flange means of the mounting box seat against the inner wall. The mounting box will thus be positioned completely inside the inner wall in the space between the inner wall and the outer wall except for the flange portion of the mounting box, which is seated against the first wall. Cables or flexible tubes with electrical wires are connected to the mounting box before the mounting box is pushed into the opening in the wall.

A mounting box, or an installation box, of the second type comprises a casing having a tubular body with a first end and an opposite second end. The second end is closed with a bottom and the first end is open providing access to the interior of the mounting box. There are radially outwardly extending flange means at the first end of the casing. A mounting space is formed in the interior of the mounting box. The mounting box is pushed through an opening in the first wall so that the flange means seat against the first wall. The mounting box is then fastened to the first wall by fastening means.

The invention is directed to the second type of mounting boxes.

### BRIEF DESCRIPTION OF THE INVENTION

An object of the present invention is to improve prior art mounting boxes.

The mounting box according to the invention is characterized by what is stated in the independent claim 1.

The mounting box according to the invention can easily be adapted into different embodiments by simply changing the top part in the mounting box. The same bottom part can be used with at least two different top parts. The mounting box forms a modular construction. The mounting box can be used in various installation environments. A first embodiment of the mounting box can accommodate a lighting switch or an electrical socket outlet for a single plug. A second embodiment of the mounting box can accommodate a 2-gang electrical socket outlet.

### BRIEF DESCRIPTION OF THE DRAWINGS

In the following the invention will be described in greater detail by means of preferred embodiments with reference to the attached drawings, in which:
Figure 1 shows a bottom part of the mounting box,
Figure 2 shows a top part of the mounting box,
Figure 3 shows another top part of the mounting box,
Figure 4 shows a mounting box comprising the bottom part and the top part of figure 2,
Figure 5 shows a mounting box comprising the bottom part and the top part of figure 3,
Figure 6 shows a cross section of figure 5,
Figure 7 shows the mounting box of figure 5 with a 2-gang socket,
Figure 8 shows a cross section of figure 6.

### DETAILED DESCRIPTION OF THE INVENTION

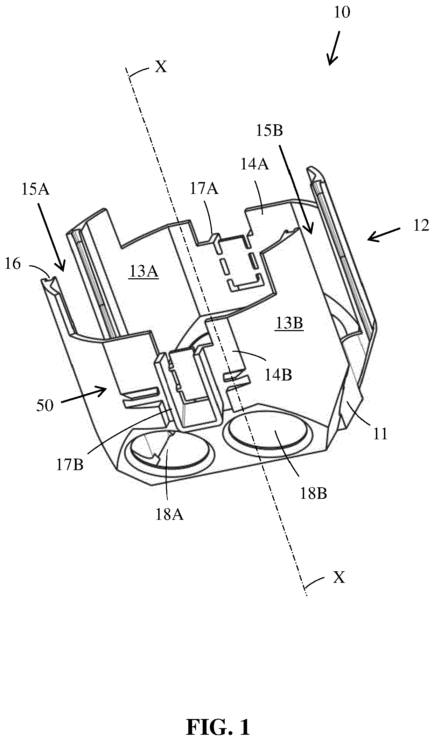

Figure 1 shows a bottom part for the mounting box. The bottom part 10 has a longitudinal centre axis X-X and is composed of a bottom portion 11 and a connection portion 12.

The bottom portion 11 of the bottom part 10 forms a closed space within it. The bottom portion 11 comprises at least one pre-prepared point 18A, 18B for a tube and/or cable lead in. Tubes and/or cables can pass through the shell of the bottom portion 11 through these pre-prepared points 18A, 18B. The pre-prepared points 18A, 18B provide a passage for electric wires positioned in tubes or in cables to pass into an interior of the mounting box 100 from an exterior of the mounting box 100. The pre-prepared points 18A, 18B can be closed with shield covers and opened during installation of the mounting box 100 by punching out the shield covers from the pre-prepared points 18A, 18B. The shield covers can be formed so that the material thickness is reduced on the circumference of the pre-prepared points 18A, 18B or so that the circumference is formed by a slot, whereby small supports cross the slot and keep the shield covers in place in the pre-prepared points 18A, 18B. The pre-prepared points 18A, 18B can on the other hand be formed of crosswise running slots making it possible to push a cable through so that the cable cannot be withdrawn easily from the pre-prepared point 18A, 18B once it has been pushed through. The pre-prepared points 18A, 18B can be positioned on inclined surfaces in the bottom portion 11.

The connection portion 12 of the bottom part 10 extends axially X-X outwards from the bottom portion 11 of the bottom part 10. The connection portion 12 comprises two diametrically opposite first slots 15A, 15B extending axially X-X from the outer edge of the connection portion 12 towards the bottom portion 11. Both axial X-X edges of the first slots 15A, 15B are provided with axial X-X grooves 16. The connection portion 12 comprises two diametrically opposite axially X-X outwardly from a perimeter of the bottom portion 11 extending first connection members 13A, 13B. The perimeter of the two first connection members 13A, 13B is formed of a curved line forming part of the perimeter of a circle. The first slots 15A, 15B are positioned on the middle of the perimeter of the first connection members 13A, 13B. The rectangular first slots 15A, 15B extend axially X-X from the outer edge of the first connection member 13A, 13B inwardly towards the bottom portion 11 of the bottom part 10.

The connection portion 12 of the bottom part 10 comprises further two diametrically opposite axially X-X outwardly from the perimeter of the bottom portion 11 extending second connection members 14A, 14B. The axial X-X edges of each of the second connection members 14A, 14B join the axial X-X edges of two adjacent first connection members 13A, 13B. The perimeter of the two second connection members 14A, 14B is formed by a straight line. The second connection members 14A, 14B are provided with axially X-X extending U-shaped guide members 17A, 17B. A portion of the guide members 17A, 17B protrude radially outwards from the perimeter of the second connection members 14A, 14B.

The connection portion 12 of the bottom part 10 has a generally tubular form and can be enclosed by a circle. The perimeter of the connection portion 12 of the bottom part 10 is curved at the first support members 13A, 13B, straight at the second connection members 14A, 14B and has openings at the first slots 15A, 15B.

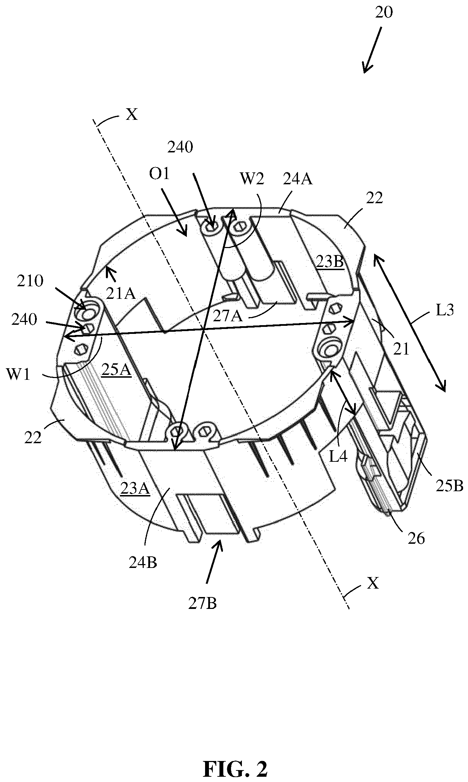

Figure 2 shows a top part for the bottom part shown in figure 1. The top part 20 has a longitudinal centre axis X-X and is composed of a body portion 21. The tubular body portion 21 has a first end 21A being provided with radially outwardly from the first end 21A of the body portion 21 extending flange means 22. The flange means 22 comprises four radially outwardly extending flange members 22 distributed at an equal angular distance from each other along the perimeter of the body portion 21 of the top part 20. The flange members 22 define a flange plane. The first end 21A of the body portion 21 of the top part 20 forms a planar surface.

The body portion 21 of the top part 20 comprises two diametrically opposite axially X-X outwardly from the body portion 21 extending screw towers 25A, 25B. Both axial X-X edges of each screw tower 25A, 25B are provided with an axial X-X guide protrusion 26. The guide protrusions 26 are received by the corresponding axial X-X grooves 16 in the first slots 15A, 15B in the bottom part 10. The top part 20 comprises two diametrically opposite axially X-X outwardly from the body portion 21 extending first support members 23A, 23B. The perimeter of the two first support members 23A, 23B is formed of a curved line forming part of the perimeter of a circle. Each of the two first support members 23A, 23B comprises at its inner perimeter the axially X-X extending generally rectangular screw tower 25A, 25B. The screw towers 25A, 25B are positioned in the centre of the perimeter of the first support members 23A, 23B. An upper end of each of the screw towers 25A, 25B is flush with a flange surface formed by the flange members 22 and comprises an opening 210 for a fastening screw extending to the lower portion of the screw tower 25A, 25B and recesses 240 for fastening screws of the electrical component that is to be accommodated in the mounting box 100. Each of the screw towers 25A, 25B has an axial X-X length L3, which is greater than the axial X-X length L4 of the first support members 23A, 23B.

The body portion 21 of the top part 20 comprises further two diametrically opposite axially X-X extending second support members 24A, 24B. The axial X-X edges of each of the second support members 24A, 24B join the axial X-X edges of two adjacent first support members 23A, 23B. The perimeter of the two second support members 24A, 24B is formed by a straight line. There are further additional fastening means in the form of bushings with recesses 240 on the inner perimeter of the second support members 24A, 24B. These form alternative fastening points for the fastening screws of the equipment that is to be accommodated in the mounting box 100. Each of the second support members 24A, 24B comprises second slots 27A, 27B extending axially X-X upwards from the outer edge of the second support member 24A, 24B. The second slots 27A, 27B receive the guide members 17A, 17B of the bottom part 10.

The top part 20 can be enclosed by a circle. The perimeter of the top part 20 has curved portions at the first support members 23A, 23B, straight portions at the second support members 24A, 24B, and straight portions at the screw towers 25A, 25B. The straight portions make it possible to connect several mounting boxes 100 together from any of these straight portions.

The longitudinal center axis X-X of the top part 20 coincides with the longitudinal center axis X-X of the bottom part 10 when they are connected together. A first width W1 of the body portion 21 of the top part 20 measured between the screw towers 25A, 25B equals to a second width W2 of the body portion 21 of the top part 20 measured between the second support members 23A, 23B. The first width W1 of the body portion 21 equals to the second width W2 of the body portion 21 in this embodiment.

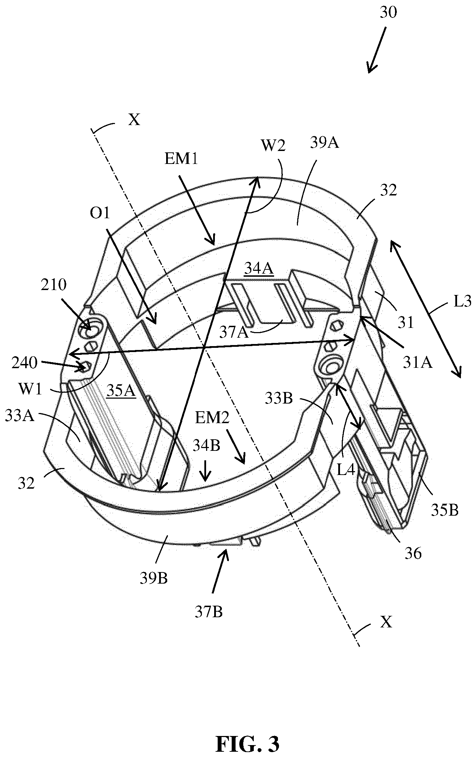

Figure 3 shows another top part for the bottom part shown in figure 1.

The top part 30 has a longitudinal centre axis X-X and is composed of a body portion 31. The tubular body portion 31 has a first end 31A being provided with radially outwardly from the first end 31A of the body portion 31 extending flange means 32. The flange means 32 comprises two radially outwardly extending flange members 32 distributed at an equal angular distance from each other along the perimeter of the body portion 31 of the top part 30. The flange members 32 define a flange plane. The first end 31A of the body portion 31 of the top part 30 forms a planar surface.

The body portion 31 of the top part 30 comprises two diametrically opposite axially X-X extending first support members 33A, 33B. The perimeter of the two first support members 33A, 33B is formed of a curved line forming part of the perimeter of a circle. Each of the two first support members 33A, 33B comprises at its inner perimeter an axially X-X extending generally rectangular screw tower 35A, 35B. The screw towers 35A, 35B are positioned in the centre of the perimeter of the first support members 33A, 33B. Each of the screw towers 35A, 35B comprises guide protrusion 36 in the lower portion at both sides of the screw tower 35A, 35B. The guide protrusions 36 are received by the grooves 16 on the edges of the first slots 15A, 15B in the first connection members 13A, 13B in the bottom part 10. An upper end of each of the screw towers 35A, 35B is flush with a flange surface formed by the flange members 32 and comprises an opening 210 for a fastening screw extending to the lower portion of the screw tower 35A, 35B and recesses 240 for fastening screws of the electrical component that is to be accommodated in the mounting box 100. Each of the screw towers 35A, 35B has an axial X-X length L3, which is greater than the axial X-X length L4 of the first support members 33A, 33B.

The body portion 31 of the top part 30 comprises further two diametrically opposite axially X-X extending second support members 34A, 34B. The axial X-X edges of each of the second support members 34A, 34B join the axial X-X edges of two adjacent first support members 33A, 33B. The perimeter of the two second support members 34A, 34B is formed by a curved line. Each of the second support members 34A, 34B comprises a recess 37A, 37B extending axially X-X upwards from the outer edge of the second support member 34A, 34B.

The body portion 31 of the top part 30 differs from the body portion 21 of the top part 20 in figure 2 in that it comprises further extension portions 39A, 39B in connection with the second support members 34A, 34B. The extension portions 39A, 39B extend the body portion 31 radially outwardly beyond the second support members 34A, 34B. Each of the extension portions 39A, 39B of the top part 30 form an extension mounting space EM1, EM2 extending the mounting space M1 that will be formed within the mounting box 100.

The outer perimeter of the body portion 31 of the top part 30 has curved portions under the flange members 32, straight portions on the screw towers 35A, 35B and further straight portions on both sides of the screw towers 35A, 35B. The outer perimeter of the body portion 31 of the top part 30 could naturally have any form, whereby the opening in the wall must have a corresponding form. The longitudinal center axis X-X passes through a middle point at the first end 31A of the body portion 31 of the top part 30. The longitudinal center axis X-X is perpendicular to the flange plane defined by the flange members 32. The flange members 32 form a support surface that seats against the edges of the opening in the wall into which the mounting box 100 is to be installed. The flange members 32 prevent the mounting box 100 from passing through the opening in the wall when it is pushed into the opening in the wall.

The longitudinal center axis X-X of the top part 30 coincides with the longitudinal center axis X-X of the bottom part 10 when they are connected together. A first width W1 of the body portion 31 of the top part 30 measured between the screw towers 35A, 35B is the same as the first width W1 in figure 2. A second width W2 of the body 31 of the top part 30 measured between the extension portions 39A, 39B is greater than the second width W2 in figure 2. The extension portions 39A, 39B extend the second width W2 of the top part 30.

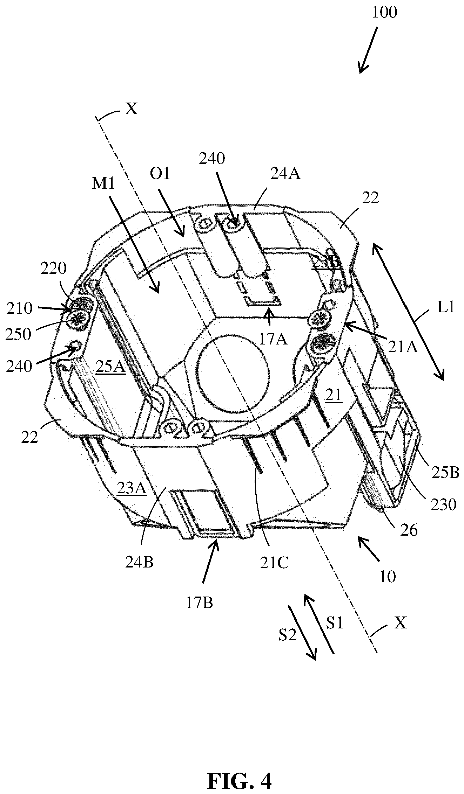

Figure 4 shows a mounting box comprising the bottom part and the top part of figure 2. The bottom part 10 has been pushed in the axial X-X direction at least partly into the top part 20 in a first direction S1 from the bottom of the top part 20. The screw towers 25A, 25B of the top part 20 glide into the first slots 15A, 15B of the bottom part 10 so that the guide protrusions 26 at the edges of the screw towers 25A, 25B glide into the axial X-X grooves 16 at the edges of the first slots 15A, 15B. The guide members 17A, 17B in the bottom part 10 glide into the corresponding second slots 27A, 27B in the top part 20.

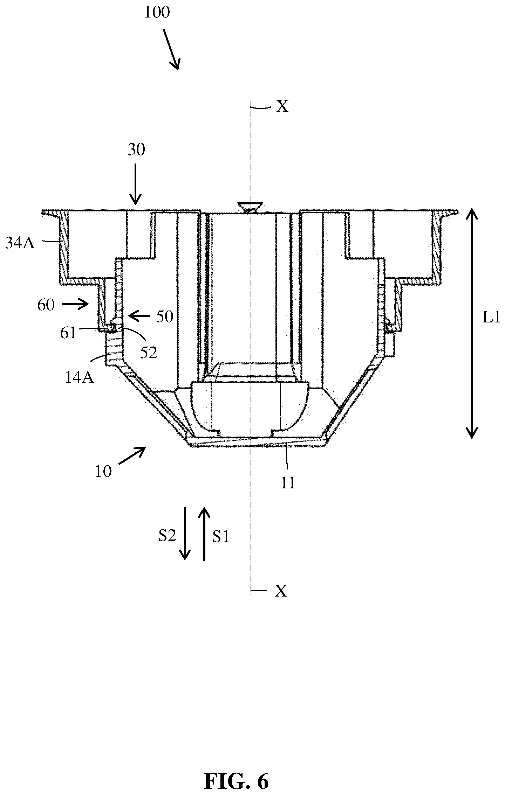

There are first connection means 50 in connection with the bottom part 10 and opposite second connection means 60 in connection with the top part 20, whereby the first connections means 50 cooperate with the second connection means 60 in order to connect the bottom part 10 to the top part 20. This will be explained more in detail in connection with figure 6.

There are small radial protrusions 21C extending axially X-X along the outer perimeter of the body portion 21 of the top part 20. The radial protrusions 21C grip into the edges of the opening into which the mounting box 100 is pushed eliminating rotation of the mounting box 100 in the opening.

There is an opening O1 passing from the first end 21A of the body portion 21 of the top part 20 through the body portion 21 into the interior of the mounting box 100. The interior of the mounting box 100 forms a mounting space M1. The mounting space M1 in the interior of the mounting box 100 is intended for accommodating an electrical component such as a wall socket or a light switch.

The figure shows also fastening means 220, 230 cooperating with the flange means 22 in order to fasten the mounting box 100 to a wall 300. The fastening means 220, 230 comprises a fastening screw 220 and a fastening member 230. The fastening screw 220 passes through the opening 210 in the first end of the screw tower 25A, 25B to the fastening member 230 located in the lower portion of the screw tower 25A, 25B. When the mounting box 100 has been pushed into the hole in the wall the fastening screw 220 is turned clockwise with a screw driver, whereby the fastening member 230 is turned radially outwardly until the side surface of the fastening member 230 seats against the inner side surface of the screw tower 25A, 25B. The fastening member 230 will then start moving in the first direction S1 towards the first end of the crew tower 25A, 25B when the fastening screw 220 is turned further clockwise. The fastening member 230 will then finally seat against the inner surface of the wall and the flange members 22 will seat against the outer surface of the wall when the mounting box is secured to the wall. The figure shows also the screws 250 for the fastening of the electrical component to be accommodated in the mounting box 100.

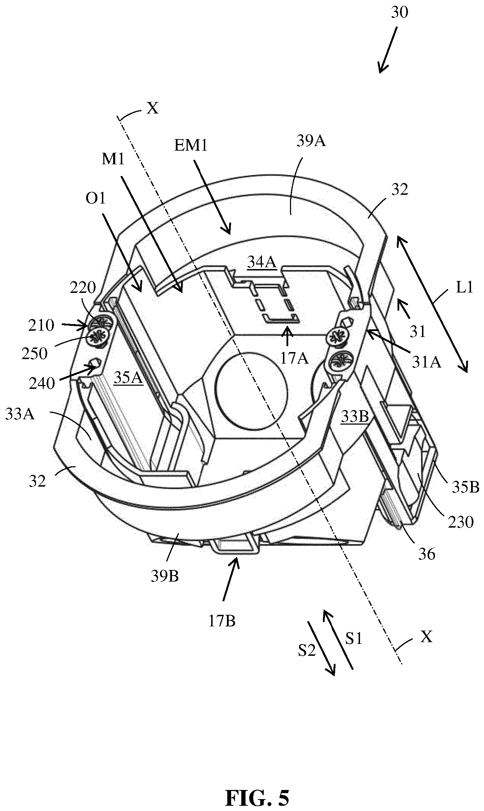

Figure 5 shows a mounting box comprising the bottom part and the second embodiment of the top part. The bottom part 10 has been pushed in the axial X-X direction at least partly into the top part 30 in a first direction S1 from the bottom of the top part 30. The screw towers 35A, 35B of the top part 30 glide into the first slots 15A, 15B of the bottom part 10 so that the guide protrusions 36 at the edges of the screw towers 35A, 35B glide in the grooves 16 at the edges of the first slots 15A, 15B. The guide members 17A, 17B in the bottom part 10 glide into the corresponding recesses 37A, 37B in the top part 30.

There are first connection means 50 in connection with the bottom part 10 and opposite second connection means 60 in connection with the top part 20, whereby the first connections means 50 cooperate with the second connection means 60 in order to connect the bottom part 10 to the top part 20. This will be explained more in detail in connection with figure 6.

There is an opening O1 passing from the first end 31A of the body portion 31 of the top part 30 through the body portion 31 into the interior of the mounting box 100. The interior of the mounting box 100 forms a mounting space M1. The mounting space M1 in the interior of the mounting box 100 is intended for accommodating an electrical component such as a wall socket or a light switch.

The figure shows also the fastening means 220, 230 cooperating with the flange means 22 in order to fasten the mounting box 100 to a wall. The fastening means 220, 230 comprises a screw 220 and a fastening member 230. The screw 220 passes through the opening 210 in the first end of the screw tower 35A, 35B to the fastening member 230 located in the lower portion of the screw tower 35A, 35B. When the mounting box 100 has been pushed into the hole in the wall the fastening screw 220 is turned clockwise with a screw driver, whereby the fastening member 230 is turned radially outwardly until the side surface of the fastening member 230 seats against the inner side surface of the screw tower 35A, 35B. The fastening member 230 will then start moving in the first direction S1 towards the first end of the crew tower 35A, 35B when the fastening screw 220 is turned further clockwise. The fastening member 230 will then finally seat against the inner surface of the wall and the flange members 32 will seat against the outer surface of the wall when the mounting box 100 is secured to the wall. The figure shows also the screws 250 for the fastening of the electrical component to be accommodated in the mounting box 100.

Each of the extension portions 39A, 39B of the top part 30 form an extended mounting space EM1, EM2 extending the mounting space M1 formed in the interior of the mounting box 100 when the top part 30 and the bottom part 10 are connected together. The mounting space M1 together with the extension mounting spaces EM1, EM2 in the interior of the mounting box 100 is intended for accommodating a 2-gang socket-outlet.

Figure 6 shows a cross section of figure 5. The bottom part 10 is pushed into the top part 30 in the first direction S1 so that first connection means 50 in the bottom part 10 connect to second connection means 60 in the top part 30. The first connection means 50 are formed in connection with the second connection members 13A, 13B in the bottom part 10. The second connection means 60 are formed in connection with the second support means 34A, 34B in the top part 30. The first connection means 50 comprises a radially directed groove 52 into which radially directed groove 52 a radially inwardly directed notch 61 of the second connection means 60 seats. There is thus a snap locking between the bottom part 10 and the top part 30. The same snap locking is also used in figure 4 between the bottom part 10 and the top part 20. There is a radially directed groove 52 on both sides of the guide means 17A, 17B (see figure 1). There is a radially inwardly directed notch 61 on both sides of the second support members 24A, 24B, whereby the position of the notches 61 corresponds to the position of the radial grooves 52. The bottom part 10 can be pushed simply by hand craft into the top part 20 without any additional equipment due to the snap locking.

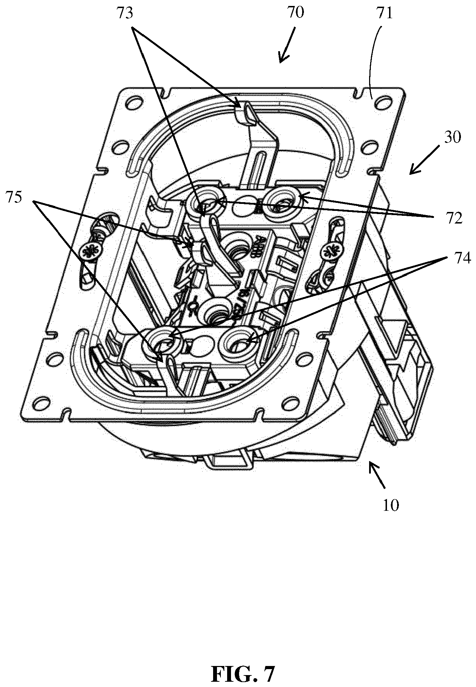

Figure 7 shows the mounting box of figure 5 with a 2-gang socket-outlet. The figure shows the bottom part 10 and the top part 30 as well as the 2-gang socket-outlet 70. The support plate 71 of the 2-gang socket-outlet 70 is seated against the outer surfaces of the screw towers 35A, 35B in the top part 30. The 2-gang socket-outlet 70 comprises a first pair of openings 72 and a first pair of earth conductors 73 for a first contact plug. The 2-gang socket-outlet comprises further a second pair of openings 74 and a second pair of earth conductors 75 for a second contact plug. The 2-gang socket-outlet 70 will be closed by a cover being flush with the wall surface. The cover is attached to the recesses 240 in the screw towers 35A, 35B in top part 30 with fastening screws 250. The cover has openings for the contact plugs. The contact plug comprises two axially X-X extending pins passing into respective openings in the socket-outlet 70 and contact surfaces on the side surface receiving the earth conductors 73, 75.

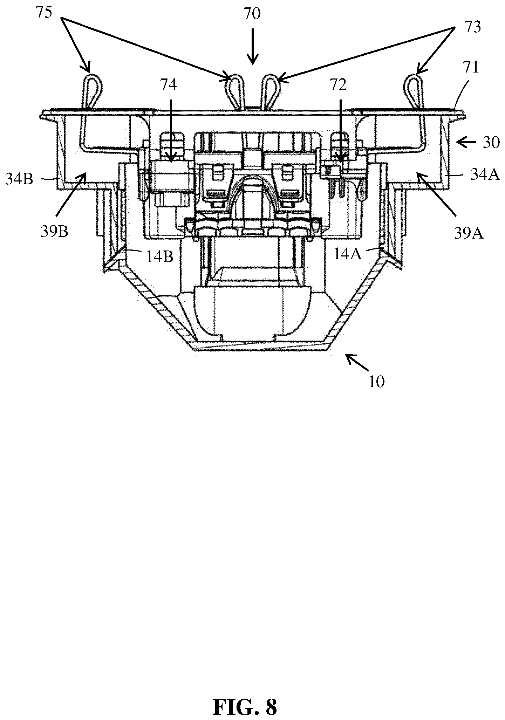

Figure 8 shows a cross section of figure 7. The figure shows the bottom part 10 and the top part 30 as well as the 2-gang socket-outlet 70. The outermost earth conductors 73, 73 are seated in the extension portions 39A, 39B of the top part 30. The second connection members 14A, 14B of the bottom part 10 are in contact with the second support members 34A, 34B of the top part 30.

The mounting box 100 is fitted into a wall construction comprising a first wall and a second wall at a distance from the first wall by pushing the mounting box 100 through an opening in the first wall so that the flange portion 22, 32 seats against an inner surface of the first wall. The mounting box 100 will thus be positioned completely inside the first wall in the space between the first wall and the second wall except for the flange portion 22, 32 seated against the first wall. The first wall and the second wall are thus both in place when the mounting box 100 is installed. The opening O1 of the mounting box 100 opens into the space restricted by the first wall. The distance between the first wall and the second wall can vary and the thickness of the first wall can vary. The distance from the flange means to the pre-prepared points 18A, 18B for the tube and/or the cable lead-ins in the bottom part 10 of the mounting box 100 can vary between a maximum value and a minimum value. This means that the mounting space within the mounting box 100 can be adjusted at any time after the mounting box 100 has been attached to the first wall.

The bottom part 10 is advantageously formed as a single integral unit. The top part 20, 30 is also advantageously formed as a separate single integral unit. The bottom part 10 and the top part 20, 30 are advantageously made of plastic. The bottom part 10 and the top part 20, 30 can have a different colour, which makes it easier to distinguish the parts. The bottom part 10 and the top parts 20, 30 can be made of different plastic material.

The outer perimeter of the body portion 21, 31 of the top part 20, 30 could also be elliptic or polygonal which means that the bottom part 10 must be elliptic or polygonal in a corresponding way. Also the opening into which the mounting box 100 is to be installed must have a cross section corresponding to the cross section of the mounting box 100. The longitudinal center axis X-X passes through a middle point at the first end 21A, 31A of the body portion 21, 31 of the top part 20, 30. The longitudinal center axis X-X is perpendicular to the flange plane defined by the flange members 22.

The bottom part 10 can naturally be provided with pre-prepared points 18A, 18B in any position in the bottom portion 11 of the bottom part 10. There could be any number of pre-prepared points 18A, 18B in the bottom portion 11 positioned in any pattern in the bottom portion 11.

The mounting box is an electrical mounting box that can be used as a distribution box for electrical wires and as a mounting box for an electrical component such as an electric switch, a socket, a TV socket etc.

The invention and its embodiments are not limited to the examples described above but may vary within the scope of the claims.

## Claims

1. A mounting box (100), comprising:
a longitudinal centre axis (X-X),
a bottom part (10), being formed of a bottom portion (11) and a connection portion (12), said bottom portion (11) forming a bottom of the mounting box (100) and having at least one pre-prepared point (18A, 18B) for a tube and/or cable lead-in,
a separate top part (20, 30) being connectable to the bottom part (10), the top part (20, 30) being formed of a tubular body portion (21, 31) with a first end (21A, 31A) and an axially (X-X) opposite second end,
the bottom part (10) and the top part (20, 30) are connected to each other through first connection means (50) positioned in connection with the bottom part (10) and second connection means (60) positioned in connection with the top part (20),
**characterized in that**
the first end (21A, 31A) of the tubular body portion (21, 31) of the top part (20, 30) is provided with radially outwardly from the body portion (21, 31) extending flange means (22, 32), and fastening means (220, 230) cooperating with the flange means (22, 32) in order to fasten the mounting box (100) to a wall (300),
the bottom part (10) is adapted to be pushed in the axial (X-X) direction at least partly into the top part (20, 30) so that an opening (O1) is formed through the body portion (21, 31) of the top part (20, 30) into a mounting space (M1) formed in the interior of the mounting box (100),
the first connection means (50) comprises a radially directed groove (52) on an outer surface of the connection portion (12) of the bottom part (10),
the second connection means (60) comprises a radially inwardly directed notch (61) on the second end of the top part (20), whereby a snap locking is achieved between the bottom part (10) and the top part (20) when the notch (61) of the second connection means (60) seats into the groove (52) on the first connection means (50).

2. A mounting box (100) according to claim 1, **characterized in that** the first connection means (50) are formed as an integral part of the bottom part (10).

3. A mounting box (100) according to claim 1 or 2, **characterized in that** the second connection means (60) are formed as an integral part of the top part (20).

4. A mounting box (100) according to any one of claims 1 to 3, **characterized in that** the top part (20, 30) comprises two diametrically opposite, axially (X-X) outwardly from the body portion (21, 31) of the top part (20, 30) extending screw towers (25A, 25B), both axial (X-X) edges of each screw tower (25A, 25B) comprising an axial (X-X) guide protrusion (26).

5. A mounting box (100) according to claim 4, **characterized in that** the connection portion (12) of the bottom part (10) comprises two diametrically opposite first slots (15A, 15B) extending axially (X-X) from the outer edge of the connection portion (12) towards the bottom portion (11), both axial (X-X) edges of each of the first slots (15A, 15B) being provided with an axial (X-X) groove (16) for receiving the axial guide protrusions (26) of the screw towers (25A, 25B) of the top part (20, 30).

6. A mounting box (100) according to claim 5, **characterized in that** the connection portion (12) of the bottom part (10) comprises:
two diametrically opposite axially (X-X) outwardly from a perimeter the bottom portion (11) extending first connection members (13A, 13B) being provided with the first slot (15A, 15B) extending axially (X-X) from the outer edge of the first connection members (13A, 13B) towards the bottom portion (11),
two diametrically opposite axially (X-X) outwardly from the perimeter of the bottom portion (11) extending second connection members (14A, 14B), the axial (X-X) edges of each of the second connection members (14A, 14B) joining the axial (X-X) edges of two adjacent first connection members (13A, 13B), the second connection members (14A, 14B) comprising axially (X-X) extending guide members (17A, 17B) protruding outwards from a perimeter of the second connection members (14A, 14B).

7. A mounting box (100) according to claim 6, **characterized in that** the body portion (21) of the top part (20) comprises:
two diametrically opposite axially (X-X) extending first support members (23A, 23B) being provided with the axially (X-X) extending screw towers (25A, 25B) positioned in the centre of the perimeter of each of the first support members (23A, 23B),
two diametrically opposite axially (X-X) extending second support members (24A, 24B), the axial (X-X) edges of each of the second support members (24A, 24B) joining the axial (X-X) edges of two adjacent first support members (23A, 23B), each of the second support members (24A, 24B) comprising second slots (27A, 27B) for receiving the guide members (17A, 17B) of the bottom part (10).

8. A mounting box (100) according to claim 7, **characterized in that** first end surfaces of the screw towers (25A, 25B) are flush with the plane formed by the flange means (22).

9. A mounting box (100) according to claim 8, **characterized in that** the first end surfaces of the screw towers (25A, 25B) comprises recesses (240) extending axially (X-X) into said screw towers (25A, 25B), whereby an installation plate of the electrical component such as a wall socket or a light switch to be accommodated in the mounting box (100) can be seated on the first end surfaces of the screw towers (25A, 25B) and attached with screws (250) to said first end surfaces.

10. A mounting box (100) according to any one of claims 6 to 9, **characterized in that** the first connection means (50) form an integral part of the second connection members (14A, 14B) of the bottom part (10).

11. A mounting box (100) according to any one of claims 7 to 9, **characterized in that** the second connection means (60) form an integral part of the second support members (24A, 24B) of the top part (20).

12. A mounting box (100) according to any one of claims 7 to 11, **characterized in that** each of the second support members (34A, 34B) in the top part (30) comprises an extended portion (39A, 39B) extending the body portion (31) radially outwardly beyond the second support members (34A, 34B), whereby a 2-gang socket outlet can be fitted into the mounting box (100).

## Patentansprüche

1. Anbringungskasten (100), Folgendes umfassend:
eine in Längsrichtung verlaufende Mittelachse (X-X),
einen unteren Teil (10), der aus einem unteren Abschnitt (11) und einem Verbindungsabschnitt (12) ausgebildet ist, wobei der untere Abschnitt (11) den Boden des Anbringungskastens (100) ausbildet und mindestens einen vorbereiteten Punkt (18A, 18B) für eine Rohr- und/oder eine Kabeleinführung aufweist,
einen getrennten oberen Teil (20, 30), der mit dem unteren Teil (10) verbindbar ist, wobei der obere Teil (20, 30) aus einem rohrförmigen Körperabschnitt (21, 31) mit einem ersten Ende (21A, 31A) und einem axial (X-X) entgegengesetzten zweiten Ende ausgebildet ist,
wobei der untere Teil (10) und der obere Teil (20, 30) durch eine erste Verbindungseinrichtung (50), die in Verbindung mit dem unteren Teil (10) angeordnet ist, und eine zweite Verbindungseinrichtung (60), die in Verbindung mit dem oberen Teil (20) angeordnet ist, miteinander verbunden sind,
**dadurch gekennzeichnet, dass**
das erste Ende (21A, 31A) des rohrförmigen Körperabschnitts (21, 31) des oberen Teils (20, 30) mit einer sich vom Körperabschnitt (21, 31) radial nach außen erstreckenden Flanscheinrichtung (22, 32) versehen ist und Befestigungseinrichtungen (220, 230) mit den Flanscheinrichtungen (22, 32) zusammenwirken, um den Anbringungskasten (100) an einer Wand (300) zu befestigen, der untere Teil (10) dazu eingerichtet ist, in Axialrichtung (X-X) zumindest teilweise in den oberen Teil (20, 30) geschoben zu werden, sodass eine Öffnung (O1) durch den Körperabschnitt (21, 31) des oberen Teils (20, 30) in einen Anbringungsraum (M1), der im Inneren des Anbringungskastens (100) ausgebildet ist, ausgebildet wird,
die erste Verbindungseinrichtung (50) eine radial gerichtete Nut (52) auf einer Außenfläche des Verbindungsabschnitts (12) des unteren Teils (10) umfasst, die zweite Verbindungseinrichtung (60) eine radial nach innen gerichtete Kerbe (61) am zweiten Ende des oberen Teils (20) umfasst, wobei zwischen dem unteren Teil (10) und dem oberen Teil (20) eine Rastverriegelung erzeugt wird, wenn die Kerbe (61) der zweiten Verbindungseinrichtung (60) in der Nut (52) an der ersten Verbindungseinrichtung (50) sitzt.

2. Anbringungskasten (100) nach Anspruch 1, **dadurch gekennzeichnet, dass** die erste Verbindungseinrichtung (50) einstückig mit dem unteren Teil (10) ausgebildet ist.

3. Anbringungskasten (100) nach Anspruch 1 oder 2, **dadurch gekennzeichnet, dass** die zweite Verbindungseinrichtung (60) einstückig mit dem oberen Teil (20) ausgebildet ist.

4. Anbringungskasten (100) nach einem der Ansprüche 1 bis 3, **dadurch gekennzeichnet, dass** der obere Teil (20, 30) zwei diametrisch entgegengesetzte, sich vom Körperabschnitt (21, 31) des oberen Teils (20, 30) axial (X-X) nach außen erstreckende Schraubentürme (25A, 25B) umfasst, wobei beide axialen (X-X) Kanten jedes Schraubenturms (25A, 25B) einen axialen (X-X) Führungsvorsprung (26) umfassen.

5. Anbringungskasten (100) nach Anspruch 4, **dadurch gekennzeichnet, dass** der Verbindungsabschnitt (12) des unteren Teils (10) zwei diametrisch entgegengesetzte erste Schlitze (15A, 15B) umfasst, die sich axial (X-X) von der Außenkante des Verbindungsabschnitts (12) zum unteren Abschnitt (11) erstrecken, wobei beide axialen (X-X) Kanten der ersten Schlitze (15A, 15B) mit einer axialen (X-X) Nut (16) zur Aufnahme der axialen Führungsvorsprünge (26) der Schraubentürme (25A, 25B) des oberen Teils (20, 30) versehen sind.

6. Anbringungskasten (100) nach Anspruch 5, **dadurch gekennzeichnet, dass** der Verbindungsabschnitt (12) des unteren Teils (10) Folgendes umfasst:
zwei diametrisch entgegengesetzte, sich von einem Umfang des unteren Abschnitts (11) axial (X-X) nach außen erstreckende erste Verbindungselemente (13A, 13B), die mit dem ersten Schlitz (15A, 15B) versehen sind, der sich von der Außenkante der ersten Verbindungselemente (13A, 13B) axial (X-X) zum unteren Abschnitt (11) erstreckt,
zwei diametrisch entgegengesetzte, sich vom Umfang des unteren Abschnitt (11) axial (X-X) nach außen erstreckende zweite Verbindungselemente (14A, 14B), wobei die axialen (X-X) Kanten jedes der zweiten Verbindungselemente (14A, 14B) die axialen (X-X) Kanten zwei angrenzender erster Verbindungselemente (13A, 13B) verbindet, wobei die zweiten Verbindungselemente (14A, 14B) sich axial (X-X) erstreckende Führungselemente (17A, 17B) umfassen, die von einem Umfang der zweiten Verbindungselemente (14A, 14B) nach außen vorstehen.

7. Anbringungskasten (100) nach Anspruch 6, **dadurch gekennzeichnet, dass** der Körperabschnitt (21) des oberen Teils (20) Folgendes umfasst:
zwei diametrisch entgegengesetzte, sich axial (X-X) erstreckende erste Trägerelemente (23A, 23B), die mit den sich axial (X-X) erstreckenden Schraubentürmen (25A, 25B), die in der Mitte des Umfangs jedes der ersten Trägerelemente (23A, 23B) angeordnet sind, versehen sind, zwei diametrisch entgegengesetzte, sich axial (X-X) erstreckende zweite Trägerelemente (24A, 24B), wobei die axialen (X-X) Kanten jedes der zweiten Trägerelemente (24A, 24B) die axialen (X-X) Kanten zweier angrenzender erster Trägerelemente (23A, 23B) verbindet, wobei jedes der zweiten Trägerelemente (24A, 24B) zweite Schlitze (27A, 27B) zur Aufnahme der Führungselemente (17A, 17B) des unteren Teils (10) umfasst.

8. Anbringungskasten (100) nach Anspruch 7, **dadurch gekennzeichnet, dass** die ersten Stirnflächen der Schraubentürme (25A, 25B) mit der durch die Flanscheinrichtung (22) ausgebildeten Ebene bündig sind.

9. Anbringungskasten (100) nach Anspruch 8, **dadurch gekennzeichnet, dass** die ersten Stirnflächen der Schraubentürme (25A, 25B) Aussparungen (240) umfassen, die sich axial (X-X) in die Schraubentürme (25A, 25B) erstrecken, wobei eine Montageplatte der elektrischen Komponente, zum Beispiel eine Wandsteckdose oder ein Lichtschalter, die/der im Anbringungskasten (100) unterzubringen ist, auf die ersten Stirnflächen der Schraubentürme (25A, 25B) gesetzt und mit Schrauben (250) an den ersten Stirnflächen befestigt werden kann.

10. Anbringungskasten (100) nach einem der Ansprüche 6 bis 9, **dadurch gekennzeichnet, dass** die erste Verbindungseinrichtung (50) in die zweiten Verbindungselemente (14A, 14B) des unteren Teils (10) integriert ist.

11. Anbringungskasten (100) nach einem der Ansprüche 7 bis 9, **dadurch gekennzeichnet, dass** die zweite Verbindungseinrichtung (60) in die zweiten Trägerelemente (24A, 24B) des oberen Teils (20) integriert ist.

12. Anbringungskasten (100) nach einem der Ansprüche 7 bis 11, **dadurch gekennzeichnet, dass** jedes der zweiten Trägerelemente (34A, 34B) im oberen Teil (30) einen verlängerten Abschnitt (39A, 39B) umfasst, der den Körperabschnitt (31) über die zweiten Trägerelemente (34A, 34B) hinaus radial nach außen verlängert, wobei eine Zweifach-Steckdose in den Anbringungskasten (100) eingebaut werden kann.

## Revendications

1. Boîtier de montage (100), comprenant :
un axe longitudinal central (X-X),
une pièce de dessous (10), formée d'une partie de dessous (11) et d'une partie de raccord (12), ladite partie de dessous (11) formant un dessous du boîtier de montage (100) et étant pourvue d'au moins un point préalablement préparé (18A, 18B) pour une amenée de tube et/ou de câble,
une pièce de dessus (20, 30) distincte raccordable à la pièce de dessous (10), la pièce de dessus (20, 30) étant formée d'une partie corps tubulaire (21, 31) dotée d'une première extrémité (21A, 31A) et d'une deuxième extrémité axialement (X-X) opposée,
la pièce de dessous (10) et la pièce de dessus (20, 30) étant raccordées entre elles par le biais de premiers moyens de raccord (50) positionnés relativement à la pièce de dessous (10) et de deuxièmes moyens de raccord (60) positionnés relativement à la pièce de dessus (20),
**caractérisé en ce que**
la première extrémité (21A, 31A) de la partie corps tubulaire (21, 31) de la pièce de dessus (20, 30) est pourvue de moyens formant brides (22, 32) s'étendant radialement vers l'extérieur depuis la partie corps (21, 31) et de moyens d'attache (220, 230) coopérant avec les moyens formant brides (22, 32) dans le but d'attacher le boîtier de montage (100) à un mur (300),
la pièce de dessous (10) est adaptée à être poussée selon la direction axiale (X-X) au moins partiellement jusque dans la partie de dessus (20, 30) de sorte à ménager une ouverture (O1) au travers de la partie corps (21, 31) de la pièce de dessus (20, 30) jusque dans un espace de montage (M1) ménagé dans l'intérieur du boîtier de montage (100),
les premiers moyens de raccord (50) comprennent une rainure (52) dirigée radialement sur une surface extérieure de la partie de raccord (12) de la pièce de dessous (10),
les deuxièmes moyens de raccord (60) comprennent une encoche (61) dirigée radialement vers l'intérieur sur la deuxième extrémité de la pièce de dessus (20), permettant d'assurer un verrouillage par enclenchement entre la pièce de dessous (10) et la partie de dessus (20) lorsque l'encoche (61) des deuxièmes moyens de raccord (60) se loge dans la rainure (52) sur les premiers moyens de raccord (50).

2. Boîtier de montage (100) selon la revendication 1, **caractérisé en ce que** les premiers moyens de raccord (50) font partie intégrante de la pièce de dessous (10).

3. Boîtier de montage (100) selon la revendication 1 ou 2, **caractérisé en ce que** les deuxièmes moyens de raccord (60) font partie intégrante de la pièce de dessus (20) .

4. Boîtier de montage (100) selon l'une quelconque des revendications 1 à 3, **caractérisé en ce que** la pièce de dessus (20, 30) comprend deux tours à vis (25A, 25B) diamétralement opposées s'étendant axialement (X-X) vers l'extérieur depuis la partie corps (21, 31) de la pièce de dessus (20, 30), les deux bords axiaux (X-X) de chaque tour à vis (25A, 25B) comprenant une protubérance de guidage axiale (X-X) (26).

5. Boîtier de montage (100) selon la revendication 4, **caractérisé en ce que** la partie de raccord (12) de la pièce de dessous (10) comprend deux premières fentes (15A, 15B) diamétralement opposées s'étendant axialement (X-X) depuis le bord extérieur de la partie de raccord (12) vers la partie de dessous (11), les deux bords axiaux (X-X) de chacune des premières fentes (15A, 15B) étant pourvus d'une rainure axiale (X-X) (16) destinée à recevoir les protubérances de guidage axiales (26) des tours à vis (25A, 25B) de la pièce de dessus (20, 30).

6. Boîtier de montage (100) selon la revendication 5, **caractérisé en ce que** la partie de raccord (12) de la pièce de dessous (10) comprend :
deux premiers éléments de raccord (13A, 13B) diamétralement opposés s'étendant axialement (X-X) vers l'extérieur depuis un périmètre de la partie de dessous (11) qui sont pourvus de la première fente (15A, 15B) s'étendant axialement (X-X) depuis le bord extérieur des premiers éléments de raccord (13A, 13B) vers la partie de dessous (11),
deux deuxièmes éléments de raccord (14A, 14B) diamétralement opposés s'étendant axialement (X-X) vers l'extérieur depuis le périmètre de la partie de dessous (11), les bords axiaux (X-X) de chacun des deuxièmes éléments de raccord (14A, 14B) joignant les bords axiaux (X-X) de deux premiers éléments de raccord (13A, 13B) adjacents, les deuxièmes éléments de raccord (14A, 14B) comprenant des éléments de guidage (17A, 17B) s'étendant axialement (X-X) faisant saillie vers l'extérieur depuis un périmètre des deuxièmes éléments de raccord (14A, 14B).

7. Boîtier de montage (100) selon la revendication 6, **caractérisé en ce que** la partie corps (21) de la pièce de dessus (20) comprend :
deux premiers éléments de support (23A, 23B) diamétralement opposés s'étendant axialement (X-X) qui sont pourvus des tours à vis (25A, 25B) s'étendant axialement (X-X) positionnées au centre du périmètre de chacun des premiers éléments de support (23A, 23B),
deux deuxièmes éléments de support (24A, 24B) diamétralement opposés s'étendant axialement (X-X), les bords axiaux (X-X) de chacun des deuxièmes éléments de support (24A, 24B) joignant les bords axiaux (X-X) de deux premiers éléments de support (23A, 23B) adjacents, chacun des deuxièmes éléments de support (24A, 24B) comprenant des deuxièmes fentes (27A, 27B) destinées à recevoir les éléments de guidage (17A, 17B) de la pièce de dessous (10).

8. Boîtier de montage (100) selon la revendication 7, **caractérisé en ce que** des premières surfaces d'extrémité des tours à vis (25A, 25B) viennent à fleur du plan formé par les moyens formant brides (22).

9. Boîtier de montage (100) selon la revendication 8, **caractérisé en ce que** les premières surfaces d'extrémité des tours à vis (25A, 25B) comprennent des renfoncements (240) s'étendant axialement (X-X) jusque dans lesdites tours à vis (25A, 25B), permettant à une plaque d'installation du composant électrique, tel qu'une prise murale ou un interrupteur d'éclairage, devant être logé dans le boîtier de montage (100), de prendre appui sur les premières surfaces d'extrémité des tours à vis (25A, 25B) et d'être fixée par des vis (250) auxdites premières surfaces d'extrémité.

10. Boîtier de montage (100) selon l'une quelconque des revendications 6 à 9, **caractérisé en ce que** les premiers moyens de raccord (50) font partie intégrante des deuxièmes éléments de raccord (14A, 14B) de la pièce de dessous (10).

11. Boîtier de montage (100) selon l'une quelconque des revendications 7 à 9, **caractérisé en ce que** les deuxièmes moyens de raccord (60) font partie intégrante des deuxièmes éléments de support (24A, 24B) de la pièce de dessus (20).

12. Boîtier de montage (100) selon l'une quelconque des revendications 7 à 11, **caractérisé en ce que** chacun des premiers éléments de support (34A, 34B) dans la pièce de dessus (30) comprend une partie étendue (39A, 39B) étendant la partie corps (31) radialement vers l'extérieur au-delà des deuxièmes éléments de support (34A, 34B), permettant l'emboîtement d'un socle de prise double dans le boîtier de montage (100).
